## Europäisches Patentamt
## European Patent Office
## Office européen des brevets

(19)

(11) Veröffentlichungsnummer: **0 017 982**
**B1**

(12) **EUROPÄISCHE PATENTSCHRIFT**

(45) Veröffentlichungstag der Patentschrift: **16.11.83**

(51) Int. Cl.³: **G 01 L 1/22**

(21) Anmeldenummer: **80102048.8**

(22) Anmeldetag: **16.04.80**

(54) Dehnungsmessstreifen und Herstellungsverfahren.

(30) Priorität: **23.04.79 DE 2916425**

(43) Veröffentlichungstag der Anmeldung:
**29.10.80 Patentblatt 80/22**

(45) Bekanntmachung des Hinweises auf die Patenterteilung:
**16.11.83 Patentblatt 83/46**

(84) Benannte Vertragsstaaten:
**FR GB IT**

(56) Entgegenhaltungen:
**DE - A - 2 730 509**
**FR - A - 2 365 101**
**GB - A - 1 151 435**
**GB - A - 1 373 592**
**US - A - 2 715 666**

(73) Patentinhaber: **SIEMENS AKTIENGESELLSCHAFT**
**Berlin und München Wittelsbacherplatz 2**
**D-8000 München 2 (DE)**

(72) Erfinder: **Utner, Ferdinand**
**Roter Brachweg 99**
**D-8400 Regensburg (DE)**
Erfinder: **Vetter, Harald, Ing. grad.**
**Weinberg 7**
**D-8400 Regensburg (DE)**

Courier Press, Leamington Spa, England.

Dehnungsmeßstreifen und Herstellungsverfahren

Die vorliegende Erfindung betrifft einen Dehnungsmeßstreifen gemäß dem Oberbegriff des Anspruchs 1 sowie Verfahren zu dessen Herstellung.

In der DE—C—25 34 433 ist auf ein Federmaterial ein elektrisch gegen dieses isolierter Dehnungsmeßstreifen aufgebracht, wobei der Dehnungsmeßstreifen auf einer Metallfolie herausgearbeitet ist. Ein derartiger Aufbau erfordert einen erheblichen Aufwand beim Abgleich des Dehnungsmeßstreifens, da die zum Aufkleben der Metallfolie erforderliche Kleberschicht u.a. aufgrund der Unebenheiten der Metallfolie relativ dick sein muß und damit zu nicht vorherbestimmbaren Einflüssen des Klebers auf die Übertragung der Dehnung von der Feder auf den Dehnungsmeßstreifen führt. Der Abgleich eines derartigen Dehnungsmeßstreifens muß auf der Feder erfolgen. Dabei könen die spezifischen Daten des Dehnungsmeßstreifens nicht mehr einwndfrei bestimmt werden, da die sehr geringen Widerstandsänderungen, die für die Messung der Dehnung ausgewertet werden sollen, durch Einflüsse der Feder, der umgebenden Atmosphäre und der Kunststoffschicht zu seht verfälscht werden. Demgemäß kann nach dem Stand der Techik nur in Verbindung mit der Auswertungsschaltung ein Funktionsabgleich am Einzelexemplar erfolgen.

Die Aufgabe, die der vorliegenden Erfindung zugrundeliegt, besteht darin, einen serienmäßig mit hoher Genauigkeit herstellbaren Dehnungsmeßstreifen sowie dafür geeignete Herstellungsverfahren anzugeben.

Diese Aufgabe wird erfindungsgemäß durch den Dehnungsmeßstreifen nach Anspruch 1 bzw. durch die in den Ansprüchen 5 und 6 angegebenen Herstellungsverfahren gelöst.

Eine Widerstandsschicht, die ohne eine Kleberschicht mit einer Kunststoffolie stoffschlüssig verbunden ist, läßt sich beispielsweise durch Aufdampfen oder Aufsputtern von Metall auf eine Kunststoffolie herstellen. Eine derartige Schicht hat den Vorteil, daß keine Kleberschicht zwischen der Kunststoffolie und der Widerstandsschicht vorhanden ist. Zum Aufkleben auf ein Werkstück kann eine dünne gleichmäßig auf die Kunststoffolie aufgetragene Kleberschicht dienen. Während diese unmittelbar mit dem relative starren Meßobjekt verbunden ist, kann eine Kleberschicht, die zwischen der Widerstandsschicht und der Kunststoffolie angebracht ist, das Meßergebnis beeinflussen. Metallfolien, die nach dem Stand der Technik als Dehnungsmeßstreifen eingesetzt werden, ergeben eine Verformung der isolierenden Zwischenlagen infolge der hohen erforderlichen Dehnungskräfte. Dünne Metallschichten der hier vorgeschlagenen Art benötigen dagegen nur geringe Dehnungskräfte. Die Kunststoffolie wird durch die dünne Metallschicht nicht verformt. Die Dehnungsmeßstreifen der vorgeschlagenen Art können in Serie im Bandverfahren hergestellt werden. Vor dem Aufkleben können die Dehnungsmeßstreifen-spezifischen Daten ermittelt und ggf. auf das Meßobjekt abgeglichen werden. Die Kontaktierung ist durch die vorgeschlagene Kontaktschicht, welche die Widerstandsschicht überlappt, einwandfrei durch Stoffschluß gewährleistet.

Die Widerstandsschicht besteht aus Chrom-Nickel und die Kontaktschicht aus Kupfer. Zum Schutz gegen mechanische Beschädigungen ist über der Widerstandsschicht vorteilhaft eine Kunststoffolie angeordnet. Dadurch kann der Dehnungsmeßstreifen ganzflächig auf den Träger aufgeklebt werden, die Druckbelastung beim Aufkleben beschädigt die Widerstandsschicht nicht.

Um Temperatureinflüsse beim Löten von der freiliegenden Widerstandsschicht fernzuhalten, ist es vorteilhaft, daß die Kontaktschicht Kontaktflächen und schmale Leiterbahnen bildet, welche zu den freiliegenden Widerstandsschichten führen. Diese schmalen Leiterbahnen können relativ kurz ausgebildet sein, da zum Löten der relativ dünnen Kontaktschichten nur eine geringe Wärmemenge erforderlich ist, Auf diese Kontaktflächen kann vorteilhaft gelötet werden. Die Widerstandsschicht weist vorteilhaft einen hohen Flächenwiderstand auf. Somit können relativ breite Bahnen ausgebildet werden. Dadurch wird der Dehnungsmeßstreifen unempfindlicher gegen geringfügige Beschädigungen bei grober mechanischer Beanspruchung.

Um eine Verfälschung des Meßergebnisses durch eine Querkontraction des Dehnungsmeßstreifens infolge der zu messenden mechanischen Spannung zu verringern, ist quer über die Widerstandsschicht zumindest eine schmaler Streifen der Kontaktschicht gelegt. Dieser Streifen vermindert durch seine mechanische Festigkeit eine Querkontraktion, da er in Richtung der zu messenden Dehnung nur eine sehr geringe Ausdehnung aufweist, so daß er die Dehnung nur teilweise mitmacht.

Ein Dehnungsmeßstreifen gemäß dem Oberbegriff des Patentanspruches 1 ist aus der GB—A—13 73 592 bekannt. Als Substrat dient eine Polyurethankunststoff der Dicke 0,5 mm. Die Widerstandsschicht besteht aus Gold und ist durch eine Zugbeanspruchung des isolierenden Substrates mit Rissen versehen worden.

Aus der US—A—27 15 666 sind Dehnungsmeßstreifen bekannt, die auf einem derart dünnen Träger (z.B. einem Zellophanfilm) angeordnet sind, daß sie an dem Meßobjekt nur durch Adhäsions- bzw. Kohäsionskräfte befestigt werden können.

Bei den angeführten Dehnungsmeßstreifen besteht die Schwierigkeit, daß aufgrund ihres Aufbaus reproduzierbare Meßergebnisse nicht mit Sicherheit erhalten werden.

Aus der DE—A—27 305 509 ist ein Dehnungsmeßstreifen bekannt, der auf einem topfförmigen Druckaufnehmer auf einer oxidierten Aluminiumschicht angeordnet, ist. Dieser Druckaufnehmer hat somit einen wesentlich anderen Aufbau als der Gegenstand der vorliegenden Erfindung und ist auch für andere Anwendungsfälle vorgesehen.

Als selektives Ätzen wird ein Verfahren verstanden, in welchem zunächst in beide Schichten ein deckungsgleiches Muster eingeätzt wird und in welchem dann weitere Teile der obenliegenden Schicht weggeätzt werden. Dies läßt sich bei der Verwendung von Chrom-Nickel als Material für die Widerstandsschicht und von Kupfer als Material für die Kontaktfolie vorteilhaft durchführen.

Als Kunststoffolie eignet sich insbesondere Polyimid, welches die für die Stabilisierung der Chrom-Nickel-Schicht erforderliche Temperatur von mindestens ca. 200°C einwandfrei übersteht.

Während die Dehnungsmeßstreifen aus Metallfolien auf einen mit Zellulosefaser-Einlage versehenen Acrylharzträger mittels dicker, relativ harter Kleberschichten aufgeklebt sind, damit die hohen Dehnungskräfte auf den Dehnungsmeßstreifen übertragen werden können, genügt bei den erfindungsgemäßen dünnen Metallisierungen eine Kunststoffolie als Träger. Dadurch sind diese Dehnungsmeßstreifen für wesentlich geringere Meßkräfte einsetzbar und können für eine erhöhte Empfindlichkeit dimensioniert werden. Die Empfindlichkeit kann über die Schichtdicke eingestellt werden.

Die Schichtdicke der Widerstandsschicht ist nach unten hin grundsätzlich nicht begrenzt, da die nicht selbsttragend sein soll, d.h. daß die so dünn ist, daß ihre Festigkeit für eine Verarbeitung in Form einer Folie nicht mehr ausreicht. Eine derartige Schicht kann vorteilhaft auf eine Kunststoffschicht aufgebracht werden, indem auf eine Kupferfolie eine Chrom-Nickel-Schicht aufgedampft oder aufgesputtert wird und indem auf diese Chrom-Nickel-Schicht die Kunststoffolie im Bandverfahren mittels einer dünnen Kleberschicht aufgeklebt wird. Im Bandverfahren lassen sich Kleberschichten do dünn und gleichmäßig auftragen, daß sie keine störende Meßbeeinflussung hervorrufen. Im Bandverfahren lassen sich auch die beschriebenen dünnen Metallfolien, insbesondere duktile Kupferfolien, so glatt auf eine Kunststoffolie aufkaschieren, daß eine ganzflächige Verklebung ohne Bildung von störenden Anhäufungen von Kleber erreicht wird.

Wird die Widerstandsschicht auf eine Kunststoffolie aufgedampft oder aufgestäubt, so wird zweckmäßigerweise auch die Kontaktschicht im selben Vakuum auf die Widerstandsschicht aufgedampft oder aufgestäubt und anschließend galvanisch verstärkt.

Eine gut realisierbare Widerstandsschicht wird durch eine Chrom-Nickel-Schicht von 200 Å Dicke erreicht. Als Kontaktschicht wird vorteilhaft eine 2000 Å dicke Kupferschicht aufgedampft bzw. aufgestäubt und diese Kupferschicht anschließend auf ca. 3 bis 5 $\mu$m galvanisch. verstärkt.

Nach dem vorgeschlagenen Verfahren kann beispielsweise ein Flächenwiderstand von 100 Ohm □ hergestellt werden. Dabei kann die Streuung des K-Faktors, der die Widerstandsänderung pro Längenänderung des Dehnungsmeßstreifens angibt, auf einem 30 m langen Band innerhalb $\pm$10% gehalten werden. Diese Streuung entspricht der einer Charge gleicher Eigenschaften. Aus einer derartigen Charge können Schaltungen aus mehreren Dehnungsmeßstreifen mit der erforderlichen Genauigkeit gebildet werden, z.B. eine Zusammenschaltung von vier Dehnungsmeßstreifen zu einer Vollmeßbrücke. Auch das Driftverhalten, die zeitliche und temperaturabhängige Änderung des Widerstandes ist innerhalb eines Bandes der beschriebenen Art weitgehend gleich, so daß bei der Zusammenschaltung mehrerer Dehnungsmeßstreifen eine hohe Nullpunkt-Stabilität gewährleistet ist.

Die Erfindung wird anhand von drei Figuren näher erläutert.

Die Figuren 1 und 2 zeigen verschiedene Beispiele von Dehnungsmeßstreifen in geschnittener Ansicht,

Fig. 3 zeigt einen Dehnungsmeßstreifen gemäß Fig. 2 in Draufsicht, Widerstandsschicht und Metallschicht schaffiert dargestellt.

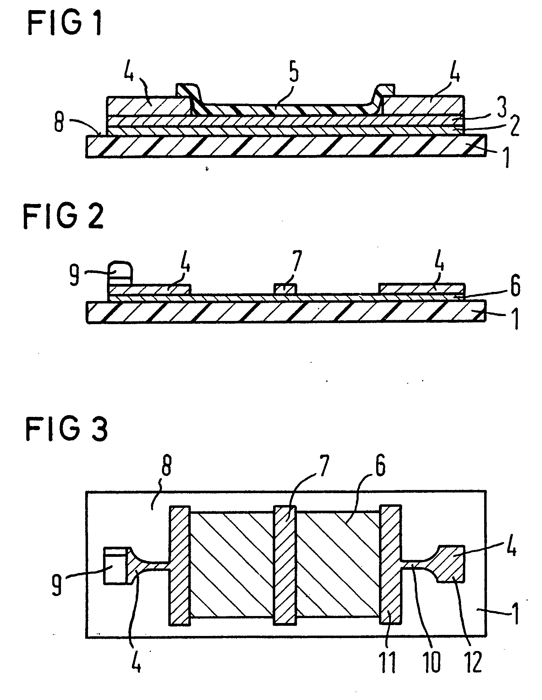

Mit einer Kunststoffolie 1 ist über eine Kleberschicht 2 eine dünne Widerstandsschicht 3 verbunden. Auf der Widerstandsschicht 3 befinden sich Kontaktflächen 4, die aus einer mit der Widerstandsschicht 3 stoffschlüssig verbundenen Metallschicht herausgearbeitet sind. Zumindest die Widerstandsschicht 3 ist durch eine Kunststoffschicht 5 mechanisch geschützt. Die Kunststoffschicht 5 ist vorzugsweise nur im nichtmetallisierten Randbereich 8 der Kunststoffolie 1 mit dieser stoffschlüssig verbunden, vorzugsweise verschweißt (Fig. 1). In Fig. 2 und 3 ist auf eine Kunststoffolie 1 eine Widerstandsschicht 6 und eine gemusterte lötfähige Metallschicht ohne dazwischenliegende Kleberschichten aufgebracht. Die Schichten sind miteinander stoffschlüssig verbunden. Sie sind vorzugsweise durch Aufdampfen oder Aufstäuben der Widerstandsschicht 6 und der gemusterten Metallschicht im gleichen Vakuum entstanden. Die gemusterte Metallschicht bildet Kontaktschichten 4 und ggf. Querstreifen 7. Sie ist wesentlich dicker als die Widerstandsschicht 6. Die Kontaktschicht 4 weist einen schmalen Bereich 10 auf. Dieser schmale Bereich 10 verbindet die Kontaktierungszone 11, die zumindest die Breite der Widerstandsschicht 6 besitzt, mit einer Kontaktfläche 12, auf der entweder direkt Anschlußelemente angelötet werden können oder ein Lötstützpunkt 9 angeordnet, ist. Der Lötstützpunkt 9 kann beispielsweise aufgeschweißt oder durch ein hochschmelzendes Lot aufgelötet sein. Die Kunststoffolie 1 besteht vorzugsweise aus Polyimid, da dieser Werkstoff die hohe Temperaturbelastung beim Löten, ggf. beim Schweißen, und bei der erforderlichen Stabilisierung die Widerstandsschicht verträgt.

Der Dehnungsmeßstreifen kann durch eine als Kunststoffschicht 5 dienende Kunststoffolie geschützt sein, welche ihn mit Ausnahme der Kontaktflächen 12 bedecken kann. Diese Kunststoffolie ist vorzugsweise im nichtmetallisierten Bereich 8 mit der Kunststoffolie 1 stoffschlüssig verbunden.

Der Streifen 7 ist so schmal, daß er die Dehnung des Dehnungsmeßstreifens aufgrund seiner mechanischen Festigkeit nur geringfügig mitmacht. Er vermindert daher eine Querkontraktion des Widerstandsstreifens 6. Eine Mäandrierung analog zu herkömmlichen Dehnungsmeßstreifen ist ebenfalls denkbar.

Der vorgeschlagene Dehnungsmeßstreifen kann auf eine Meßobjekt ohne besondere Schwierigkeiten ganzflächig aufgeklebt werden. Da die zur Dehnung der Widerstandsschicht erforderliche Kraft nur sehr gering ist, tritt keine Scherung oder sonstige Verformung der Kunststoffolie 1 auf, welche bei herkömmlichen Dehnungsmeßstreifen einen Funktionsabgleich nach dem Aufkleben des Streifens erforderlich macht.

**Patentansprüche**

1. Dehnungsmeßstreifen, bei dem eine streifenförmige Widerstandsschicht (3, 6) auf ein isolierendes Substrat (1) aus Kunststoff aufgebracht ist, bei dem die Widerstandsschicht an den Streifenenden jeweils von einer lötbaren Kontaktschicht (4) überlappt und mit dieser stoffschlüssig verbunden ist und bei dem Anschlußelemente (9) über von der Kontaktschicht gebildete Kontaktflächen (12) mit der Widerstandsschicht elektrisch leitend verbunden sind, dadurch gekennzeichnet, daß

(a) das Substrat (1) aus einer Kunststoffolie besteht;
(b) die Widerstandsschicht (3, 6) aus Chrom-Nickel besteht;
(c) die Kontaktschicht (4) auf Kupfer besteht;
(d) quer über die Widerstandsschicht (3, 6) zumindest ein Streifen (7) aus dem Material der Kontaktschicht gelegt und ggf. galvanisch verstärkt ist.

2. Dehnungsmeßstreifen nach Anspruch 1, dadurch gekennzeichnet, daß über der Widerstandsschicht (3, 6) eine Abdeckfolie (5) aus Kunststoff angeordnet und mit der Kunststoffolie (1) stoffschlüssig verbunden ist.

3. Dehnungsmeßstreifen nach Anspruch 1 oder 2, dadurch gekennzeichnet, daß die Anschlußelemente (9) und die Kontaktflächen (12) mit den die Streifenenden der Widerstandsschicht überlappenden Teilen der Kontaktschicht (4) über schmale Leiterbahnen (10) verbunden sind, welche ebenfalls von der Kontaktschicht (4) gebildet sind.

4. Dehnungsmeßstreifen nach einem der Ansprüche 1 bis 3, dadurch gekennzeichnet, daß die Widerstandsschicht (3, 6) einen Flächenwiderstand von 100 Ohm aufweist und ggf. mäandriert ist.

5. Verfahren zur Herstellung des Dehnungsmeßstreifens nach einem der Ansprüche 1 bis 4, dadurch gekennzeichnet, daß auf einer als Kontaktschicht (4) vorgesehenen Kupferfolie eine Widerstandsschicht (3) aus Chrom-Nickel aufgebracht wird, daß die Widerstandsschicht (3) thermisch stabilisiert wird, daß auf die Widerstandsschicht (3) dann eine Kunststoffolie (1) ganzflächig aufkaschiert wird und daß schließlich in der Kontaktschicht (4) und der Widerstandsschicht (3) durch selektives Ätzen die benötigten Muster des Meßwiderstands, der Kontaktflächen (12) und des Querstreifens (7) erzeugt werden.

6. Verfahren zur Herstellung des Dehnungsmeßstreifens nach einem der Ansprüche 1 bis 4, dadurch gekennzeichnet, daß auf eine Kunststoffolie (1) zunächst eine Widerstandsschicht (6) aufgedampft oder aufgestäubt, dann eine Kontaktschicht (4) aus Metall stoffschlüssig aufgebracht wird, daß dann in der Kontaktschicht (4) und der Widerstandsschicht (6) durch selektives Ätzen die erforderlichen Muster des Meßwiderstands, der Kontaktflächen (12) und des Querstreifens (7) erzeugt werden und daß schließlich die Widerstandsschicht (6) thermisch stabilisiert wird.

7. Verfahren nach Anspruch 5, dadurch gekennzeichnet, daß auf die Kupferfolie (4) die Chrom-Nickel-Schicht (3) aufgedampft oder aufgestäubt und daß auf diese Chrom-Nickel-Schicht (3) die Kunststofffolie (1) im Bandverfahren mittels einer Kleberschicht (2) aufgeklebt wird.

**Revendications**

1. Jauge de contrainte, dans laquelle une couche résistive (3, 6) en forme de bande est déposée sur un substrat (1) isolant en matière plastique, dans laquelle la couche résistive est recouverte aux extrémités de la bande respectivement par une couche de contact (4) soudable et est reliée à celle-ci par coopération de matière et dans laquelle des éléments de connexion (9) sont reliés, d'une manière électriquement conductrice, par l'intermédiaire de surfaces de contact formées par la couche de contact, à la couche résistive, caractérisée en ce que

(a) le substrat (1) est en une feuille de matière plastique;

(b) la couche résistive (3, 6) est en chrome-nickel;
(c) la couche de contact (4) est en cuivre;
(d) au moins une bande (7) en le matériau de la couche de contact est placée transversalement au-dessus de la couche résistive (3, 6) et, le cas échéant, est renforcée galvaniquement.

2. Jauge de contrainte suivant la revendication 1, caractérisée en ce qu'une feuille de recouvrement (5) en matière plastique est disposée au-dessus de la couche résistive (3, 6) et est reliée avec coopération de matière à la feuille de matière plastique (1).

3. Jauge de contrainte suivant la revendication 1 ou 2, caractérisée en ce que les éléments de connexion (9) et les surfaces de contact (12) sont reliés aux extrémités de bande des parties de la couche de contact (4) qui recouvrent la couche résistive par l'intermédiaire de voies conductrices (10) étroites, qui sont formées également à partir de la couche de contact (4).

4. Jauge de contrainte suivant l'une des revendications 1 à 3, caractérisée en ce que la couche résistive (3, 6) présente une résistance superficielle de 100 ohm et est, le cas échéant, en forme de méandres.

5. Procédé de fabrication d'une jauge de contrainte suivant l'une des revendications 1 à 4, caractérisé en ce qu'il consiste à déposer une couche résistive (3) en chrome-nickel sur une feuille de cuivre prévue comme couche de contact (4), à stabiliser thermiquement la couche résistive (3), à plaquer ensuite une feuille de matière plastique (1) sur toute la surface de la couche résistive (3), et enfin à produire, dans la couche de contact (4) et dans la couche résistive (3), par décapage sélectif, les motifs nécessaires de la résistance de mesure, des surfaces de contact (12) et de la bande transversale (7).

6. Procédé de fabrication de la jauge de contrainte suivant l'une des revendications 1 à 4, caractérisé en ce qu'il consiste à déposer d'abord par évaporation ou par saupoudrage une couche résistive (6) sur une feuille de matière plastique (1), puis à déposer, par coopération de matière, une couche de contact (4) en métal, puis à produire dans la couche de contact (4) et dans la couche résistive (6), par décapage sélectif, les motifs nécessaires de la résistance de mesure, des surfaces de contact (12) et de la bande transversale (7), et enfin à stabiliser thermiquement la couche résistive (6).

7. Procédé suivant la revendication 5, caractérisé en ce qu'il consiste à déposer par évaporation ou par saupoudrage la couche de chrome-nickel (3) sur la feuille de cuivre (4) et à coller sur cette couche de chrome-nickel la feuille de matière plastique (1) par un procédé à la chaîne au moyen d'une couche de colle (2).

## Claims

1. A strain gauge, wherein a strip-shaped resistive layer (3, 6) is applied to an insulating substrate (1) made of synthetic resin material, wherein the resistive layer is overlapped by a solderable contact layer (4) at each end of the strip and is materially bonded thereto, and wherein connecting elements (9) are electrically conductively connected to the resistive layer by way of contact surfaces (12) formed by the contact layer, characterised in that

(a) the substrate (1) consists of a synthetic resin film;
(b) the resistive layer (3, 6) consists of chrome-nickel;
(c) the contact layer (4) consists of copper;
(d) at least one strip (7) made of the material of the contact layer is positioned transversally across the resistive layer (3, 6) and is possibly electrolytically reinforced.

2. A strain gauge as claimed in Claim 1, characterised in that a covering film (5) made of synthetic resin material is arranged over the resistive layer (3, 6) and is materially bonded to the synthetic resin film (1).

3. A strain gauge as claimed in Claim 1 or Claim 2, characterised in that the connecting elements (9) and the contact surfaces (12) are connected to those parts of the contact layer (4) which overlap the strip ends of the resistive layer by way of narrow conductor paths (10) which are also formed by the contact layer (4).

4. A strain gauge as claimed in one of Claims 1 to 3, characterised in that the resistive layer (3, 6) has a surface resistance of 100 Ohm and is possibly serpentine in shape.

5. A process for the production of a strain gauge as claimed in one of Claims 1 to 4, characterised in that a resistive layer (3) consisting of chrome-nickel is applied to a copper foil which is provided as contact layer (4); that the resistive layer (3) is thermally stabilised; that the entire surface of the resistive layer (3) is then covered with a synthetic resin film (1); and that finally the required patterns of the measuring resistance, the contact surfaces (12), and the transverse strip (7) are produced in the contact layer (4) and the resistive layer (3) by selective etching.

6. A process for the production of a strain gauge as claimed in one of Claims 1 to 4, characterised in that a resistive layer (6) is first applied to a synthetic resin film (1) by vapour deposition or atomization, whereupon a contact layer (4) made of metal is applied so as to be materially bonded thereto; that the required patterns of the measuring resistance, the contact surfaces (12) and the transverse strip (7) are then produced in the contact layer (4) and the resistive layer (6) by selective etching; and that finally the resistive layer (6) is thermally stabilised.

7. A process as claimed in Claim 5, characterised in that the chrome-nickel layer (3) is applied to the copper foil (4) by vapour deposition or atomization; and that the synthetic resin film (1) is stuck on to this chrome-nickel layer (3) by means of an adhesive layer (2), in a strip process.

# FIG 1

# FIG 2

# FIG 3